# EUROPEAN PATENT SPECIFICATION

(11) **EP 0 529 841 B1**
(45) Date of publication and mention of the grant of the patent: **16.10.1996**
(21) Application number: 92307189.8
(22) Date of filing: 06.08.1992
(51) Int. Cl.: C09J 183/14, C09J 183/04

(54) **Moisture-curable silicone pressure sensitive adhesives**
Feuchtigkeitshärtende druckempfindliche Silikonklebstoffe
Adhésifs sensibles à la pression à base de siloxane durcissable par l'humidité

(30) Priority: 22.08.1991 US 748478; 22.08.1991 US 748477; 22.08.1991 US 748500
(43) Date of publication of application: 03.03.1993
(73) Proprietor: DOW CORNING CORPORATION, Midland Michigan 48686-0994 (US)
(72) Inventor: Krahnke, Robert Harold, Midland, Michigan (US); Schoenherr, William Joseph, Midland, Michigan (US); Tangney, Thomas John, Midland, Michigan (US); Mealey, Shawn Keith, Midland, Michigan (US); Smith, Schuyler Baird, Midland, Michigan (US); Clark, Joseph Norbert, Freeland, Michigan (US)
(74) Representative: Dowden, Marina

(56) References cited:
- EP-A- 0 307 098
- EP-A- 0 307 098
- EP-A- 0 360 516
- EP-A- 0 360 516
- EP-A- 0 380 875
- FR-A- 2 345 491
- DATABASE WPIL Section Ch, Week 8513, 22 May 1985 Derwent Publications Ltd., London, GB; Class A81, AN 85-081019

## Description

The present invention relates to compositions which provide silicone pressure sensitive adhesives, hereinafter also referred to as SPSAs, which cure by the action of ambient moisture, and to a method for their preparation. In a preferred embodiment the present invention relates to SPSA compositions which cure to a permanent adhesive which is useful as a structural adhesive.

By the term "silicone pressure sensitive adhesive", it is meant an adhesive comprising one or more siloxane components and possessing sufficient tack and cohesive strength so that it can be adhered with mild pressure to a clean stainless steel substrate and then removed therefrom and adhered to the same or another clean substrate. By the term "permanent adhesive" it is meant an adhesive that bonds to a clean substrate and cannot be so removed and thereafter readhered.

At the present time, all commercial SPSA compositions are designed for the relatively low strength bonding of surfaces, such as electrical insulating tapes, medical tapes and devices and high temperature masking tapes. These commercial SPSA compositions are also designed to possess their ultimate adhesive properties when first applied.

However, there is a need for a SPSA which will provide higher bonding strengths and/or which will develop additional adhesive properties, such as resistance to flow or long term durability, after being applied.

Silicone structural glazing of curtainwall panels represents one of those needs. Durable structural glazing is currently done with silicone sealants in a multi-step, labor-intensive, time-consuming process. Significant improvements in the structural glazing process could be realized if a SPSA were used in place of the silicone sealant in the current process.

Unfortunately, standard SPSAs are not completely suitable for structural glazing applications because of their inherent flowability, albeit slow in the recently improved SPSAs, under sustained stress. Under the sustained stress of gravity the heavy glass panel that is currently used in structural glazing, if supported only by pressure sensitive adhesive, would eventually experience shear failure of the bond. A SPSA that cures to a non-shearing adhesive having high adhesive strength would be very beneficial in this and other applications.

Currie et al., U.S. Patent No. 2,814,601, disclose SPSA compositions which are useful for bonding silicone rubber to metal, such as aluminium, and which will cure to a permanent bond adhesive at room temperature.

Blizzard et al., U.S. Patent No. 4,613,534 claims a permanent-bond adhesive for bonding coated fabric that is used in the construction of air- or tension-supported structures.

However, the compositions of Currie et al. and of Blizzard et al. cure spontaneously at room temperature when mixed, even in the absence of moisture and, therefore, cannot be mixed and stored before use but, rather, must be used shortly after being prepared.

EP-A-0 360516 describes a pressure-adherent silicone elastomer which has properties which make it particularly suitable for medical applications. The pressure-adherent silicone elastomer composition comprises an homogenous mixture of silicone pressure sensitive adhesive composition, a crosslinkable silicone elastomer composition, and, optionally, a viscosity reducing agent.

Specifically, the silicone pressure sensitive adhesive composition is a condensation product, with a plasticity of less then 5.lmm, of a benzene-soluble resinous copolymer containing silicon-bonded hydroxyl radicals and consisting essentially of triorganosiloxy units of the formula R₃SiO_{1/2} and tetrafunctionalsiloxy units of the formula SiO_{4/2} in a ratio of 0.6 to 0.9 : 1, respectively, and a polydiorganosiloxane having a viscosity of from 100 to 50,000 mPa.s at 25°C.

It is an object of this invention to provide compositions which provide SPSAs which will become a permanent adhesive in the presence of ambient moisture and which can be prepared and stored until used to provide a moisture-curable SPSA, when desired, without further mixing or processing. New SPSAs, and compositions for their preparation, which are suitable for structural glazing applications are provided by this invention. It is a related object of this invention to provide a method for preparing the compositions of this invention.

These objects, and others which will become apparent to one of ordinary skill in the pressure sensitive adhesive art upon considering the following disclosure and appended claims, are obtained by the present invention which, briefly stated, comprises preparing a silicone pressure sensitive adhesive, suitably substituted with silicon-bonded curing radicals, which will cure via the curing radicals to a stronger SPSA and, preferably, a permanent adhesive when exposed to ambient moisture. A catalyst is advantageously included to promote the moisture-initiated reaction of the silicon-bonded curing radicals to form siloxane bonds. In preferred compositions of this invention the silicon-bonded curing radicals bear trimethoxysilylalkyl moieties and the catalyst is an organic titanate.

The method of this invention comprises modifying a SPSA composition so that it bears the necessary curing radicals or preparing a SPSA composition from components which bear the necessary curing radicals.

The compositions of this invention are useful for adhering an object to a substrate without the need for means to hold the object in place while the adhesive cures. The solvent-containing, silanol-free compositions can be stored for long periods of time in the absence of moisture and then used to provide a moisture-curable SPSA. The solvent- and silanol-free compositions, such as an adhesive transfer film, can be stored for long periods of time in the absence of moisture and then used to adhere an object to a substrate.

The present invention relates to a composition comprising:
(A) a silicone pressure sensitive adhesive component bearing curing radicals having the formula Me_{b}(MeO)_{3-b}Si(C₂H₄SiMe₂)ₓ(OSiMe₂)yD- wherein Me denotes methyl, D denotes oxygen or C₂H₄, b = 0 or 1, x = 0 to 2 and y has an average value of from 0 to 6, wherein the silicone pressure sensitive adhesive component comprises a bodied mixture of (1) a silanol-containing organopolysiloxane resinous portion comprising Me₃SiO_{1/2} siloxane units and SiO_{4/2} siloxane units, wherein the mol ratio of the Me₃SiO_{1/2} siloxane units to SiO_{4/2} siloxane units has a value of from 0.5/1 to 1.5/1 and (2) a polydimethylsiloxane gum having a viscosity at 25°C of from 100,000 to 100,000,000 mPa.s (centipoise), wherein the weight ratio of the resinous portion (1) to the polydimethylsiloxane gum (2) is in the range of from 5/95 to 70/30, all other silicon-bonded radicals of the silicone pressure sensitive adhesive component being selected from the group consisting of divalent oxygen atoms linking silicon atoms, hydroxyl radicals, hydrogen atoms and monovalent hydrocarbon radicals,
   and wherein, said composition further comprises:
(B) an effective amount of a catalyst component to accelerate the reaction of the curing radicals with moisture to form siloxane bonds; and
(C) an effective amount of a silicon compound bearing a plurality of silicon-bonded alkoxy radicals to improve the shelf life of the composition.

Curing radicals having the formula Me_{b}(MeO)_{3-b}Si(C₂H₄ SiMe₂)ₓ(OSiMe₂)_{y}D-are present in the SPSA component to provide a way to improve one or more physical properties of the SPSA. To obtain maximum curing rates for the adhesive compositions of this invention it is preferred that the value of subscript b in the curing radical formula is zero.

The -(C₂H₄SiMe₂)ₓ(OSiMe₂)_{y}D- component of the curing radical is a divalent radical which durably links the silicon atom of the curing radical to a silicon atom of the SPSA so that (a) the silicon atom of the curing radical is not removed from the SPSA component during moisture-curing of the SPSA and (b) the moisture-curing reaction is not adversely limited. This group of radicals has no other known requirements. Preferably, the value of the subscript x is 1, and the value of subscript y is 0 or 1, each both inclusive, and the sum of x + y is zero or more.

Preferably, this group includes silhydrocarbonsiloxane linkages, such as -(OSiMe₂)CH₂CH₂-, -(CH₂CH₂SiMe₂)(OSiMe₂)-CH₂CH₂-, -(CH₂CH₂SiMe₂)O- and -(CH₂CH₂SiMe₂) (OSiMe₂)O-; silhydrocarbon linkages, such as -(CH₂CH₂SiMe₂)CH₂CH₂- and -CH₂CH₂-; and siloxane linkages, such as -(OSiMe₂)O- and -O-.

Specific examples of suitable curing radicals include, but are not limited to (MeO)₃SiCH₂CH₂-, (MeO)₃SiO-, Me(MeO)₂SiO-, (MeO)₃SiCH₂CH₂SiMe₂CH₂CH₂SiMe₂O-, (MeO)₃SiCH₂CH₂SiMe₂O-, (MeO)₃SiCH₂CH₂SiMe₂OSiMe₂O- and (MeO)₃-SiCH₂CH₂SiMe₂OSiMe₂CH₂CH₂-.

Herein the ethylene radical is sometimes written as C₂H₄ to indicate the isomeric mixture of CH₂CH₂ and CH₃CH linkages that are obtained when an hydrosilylation reaction between a silicon-bonded vinyl radical and a silicon-bonded hydrogen atom occurs. For example, the formula (MeO)₃SiC₂H₄SiMe₂O- is to be construed as encompassing (MeO)₃SiCH₂CH₂SiMe₂O- and/or (MeO)₃SiCH(CH₃)SiMe₂O-.

Capping radicals having the formula Me₃SiO_{1/2} preferably are present in the SPSA component to reduce, and preferably eliminate, the silanol content of the component.

Silicon-bonded radicals of the silicone pressure sensitive adhesive component which are not curing radicals or capping radicals having the formulae indicated are selected from divalent oxygen atoms linking silicon atoms and monovalent radicals selected from hydrogen atoms and the hydrocarbon radicals, which can be any monovalent hydrocarbon radical having, for example, from 1 to 10, preferably from 1 to 6, carbon atoms, such as lower alkyl radicals, such as, methyl, ethyl, propyl and isopropyl; alkenyl, such as, vinyl; and aryl, such as phenyl.

The SPSA component of the compositions of this invention bearing curing radicals and capping radicals can be prepared by introducing the required curing and capping radicals, in any desired sequence, into a preformed SPSA and/or into one or more of the siloxane components of the SPSA, by way of reactive sites, such as silicon-bonded hydroxyl or vinyl radicals, therein.

SPSA compositions which are converted to the SPSA component of the compositions of this invention comprise (1) an organopolysiloxane resin and (2) a polydiorganosiloxane gum. The weight ratio of resin (1) to gum (2) in the SPSAs ranges from 5/95 to 70/30, preferably 40/60 to 60/40. The silicon-bonded radicals of these SPSAs are selected from the group consisting of divalent oxygen atoms linking silicon atoms, hydroxyl radicals and monovalent hydrocarbon radicals, such as alkyl, aryl, alkenyl, cycloalkyl, cycloalkenyl, aralkyl and alkaryl; and hydrogen atoms.

The organopolysiloxane resin (1) consists essentially of Me₃SiO_{1/2} siloxane units and SiO_{4/2} siloxane units and can be dissolved, substantially completely, in either a hydrocarbon liquid such as benzene, toluene, xylene, and heptane or in a silicone liquid such as a low viscosity cyclic or linear polydiorganosiloxanes.

The mol ratio of the Me₃SiO_{1/2} siloxane units to SiO_{4/2} siloxane units of component (1) has a value of from 0.5/1 to 1.5/1, preferably from 0.6/1 to 0.9/1. These mol ratios are easily measured by Si²⁹ n.m.r. spectroscopy.

Component (1) consisting essentially of Me₃SiO_{1/2} siloxane units and SiO_{4/2} siloxane units can be prepared by any suitable method. That is to say, it is believed that the organopolysiloxane resin (1) can be prepared by, for example, silane co-hydrolysis methods or silica hydrosol capping methods known in the art. Component (1) is preferably prepared by the silica hydrosol capping processes of Daudt, et al., U.S. Patent No. 2,676,182; of Rivers-Farrell et al., U.S. Patent No. 4,611,042; and of Butler, U.S. Patent No. 4,774,310; each teach how to prepare organopolysiloxane resins which can be reacted to contain curing radicals or which can be used to make SPSAs which can be reacted to contain curing radicals.

Component (2) of the SPSA component to be converted to contain curing radicals is a polydiorganosiloxane gum having the general formula R³R²₂SiO(R²₂SiO)ₙSiR²₂R³. In this formula, each R² denotes a hydrogen atom or a monovalent hydrocarbon radical and each R³ denotes a radical selected from the group consisting of R² radicals and OH radicals. Examples of R² radicals include the hydrocarbon radicals which include monovalent hydrocarbon radicals, preferably having from 1 to 10 carbon atoms, an hydroxyl radical or a hydrogen atom. Examples of suitable hydrocarbon radicals include alkyl radicals, such as methyl, ethyl, propyl, pentyl, octyl, undecyl and octadecyl; alkenyl radicals, such as vinyl, allyl, and 5-hexenyl, cycloaliphatic radicals, such as cyclohexyl and cyclohexenylethyl and aryl radicals such as phenyl, tolyl, xylyl, benzyl and 2-phenylethyl.

At least 50%, and preferably at least 90% of the R² radicals of Component (2) are methyl radicals. The methyl radicals can be distributed in any preferred manner in the polydiorganosiloxane.

General examples of polydiorganosiloxanes which are suitable for use as component (2) in the compositions of this invention include hydroxyl-, hydrogen- and hydrocarbon- terminated polydiorganosiloxanes. Specific examples of these polydiorganosiloxanes include, but are not limited to, the polydiorganosiloxanes in the examples disclosed below and ViMe₂SiO(Me₂SiO)ₙSiMe₂Vi, ViMe₂SiO(Me₂SiO)_{0.98n}(MeViSiO)_{0.02n}SiMe₂Vi, Me₃SiO(Me₂SiO)_{0.9n}(MeViSiO)_{0.1n}SiMe₃, HMe₂SiO(Me₂SiO)ₙSiMe₂H, Me₃SiO(Me₂SiO)_{0.9n}(MeHSiO)_{0.1n}SiMe₃, HOMe₂SiO(Me₂SiO)ₙSiMe₂OH and HOR²₂SiO(Me₂SiO)_{0.95n}(MeViSiO)_{0.05n}SiR²₂OH, wherein Me, Vi and Ph denote methyl, vinyl and phenyl, respectively.

The average values of the subscript n in the above formulae are such that the organopolysiloxane component (2) has a viscosity at 25°C. of from 100,000 centipoise (100 pascal-seconds) to 100,000,000 centipoise (100 kilopascal-seconds). The exact value of the subscript n needed to provide a viscosity value falling within said limits depends upon the identity of the R² radicals; however, for hydroxyl-terminated and/or R²-terminated polydiorganosiloxanes containing at least 90% methyl radicals n will have a value ranging from one to several thousands. From a consideration of maximum adhesive properties, component (2) is preferably a gum having a viscosity of at least 1,000,000 mPa.s (centipoise) at 25°C.

Component (2) can comprise trace amounts of siloxane branching sites, such as R²SiO_{3/2} units and SiO_{4/2} units and can be comprised of a single polydiorganosiloxane or a mixture of two or more different polydiorganosiloxanes, if desired.

Polydiorganosiloxanes are well known in the organosilicone art and their synthesis needs no extensive delineation herein. Many are commercially available from major silicone manufacturers.

SPSAs having sites of the formula SiOH, herein also denoted as a silanol-functional SPSA, can be any of those known in the art. The disclosures of U.S. Patent Nos. 2,736,721; 2,814,601; 2,857,356; 3,527,842; 3,528,940; 3,839,075; 3,929,704; 3,983,298; 4,309,520; 4,584,355; 4,591,622; and 4,774,297 illustrate silanol-functional SPSAs that can be used to prepare the moisture-curable SPSA component of the compositions of this invention.

SPSAs having sites of the formula Si-alkenyl, herein also denoted as an alkenyl-functional SPSA, can be prepared, for example, by replacing one or more of the silanol-functional components normally used to prepare a silanol-functional SPSA compositions known in the art with an alkenyl-functional component.

SPSAs having sites of the formula SiH, herein also denoted as an hydrogen-functional SPSA, can be prepared, for example, by replacing one or more of the silanol-functional components normally used to prepare silanol-functional SPSA compositions known in the art with an hydrogen-functional component.

A preferred SPSA composition to be used to prepare the SPSA component of the compositions of this invention is a bodied SPSA composition. A bodied SPSA composition can be prepared by heating a solution of a silanol-functional SPSA in a solvent, such as a water-azeotroping hydrocarbon, at reflux until its silanol content has been reduced, preferably to a value of less than one weight percent.

The SPSA component of this invention bearing curing radicals can be prepared by a method wherein an ≡SiX-functional SPSA is reacted with a compound that will convert one or more ≡SiX groups in the SPSA to a curing radical having the formula noted above. Any ≡SiOH groups which are not converted to curing radicals are preferably capped with Me₃SiO_{1/2} radicals to obtain a moisture-curable SPSA of this invention which has substantial resistance to gelling when it is stored in the absence of moisture. As noted above, the curing radicals can be introduced into the organopolysiloxane resin portion, into the polydiorganosiloxane gum portion, into the SPSA after it has been prepared or into any combination of said portions and SPSA. It should be understood that at least the polydiorganosiloxane gum or the organopolysiloxane resinous portion or the SPSA composition made therefrom must contain a sufficient number of ≡SiX reactive sites to accommodate the introduction of the needed curing radicals.

The present invention further relates to a method of preparing the composition of claim 1, comprising reacting (i) the silicone pressure sensitive adhesive component of claim 1 having reactive sites of the formula ≡SiX, with (ii) a moisture reactive compound having the formula Me_{b}(MeO)_{3-b}SiY wherein Y denotes a radical which is reactive with ≡SiX, whereby the Y-substituted silicon atom is linked with the X-substituted silicon atom by a divalent (C₂H₄SiMe₂)ₓ(OSiMe₂)yD as defined in claim 1 and (iii) reacting SiOH groups with a silanol-capping compound having the formula Me₃SiY' wherein Y' denotes a radical which is reactive with silanol, whereby the Y'-substituted silicon atom is linked with the silanol-substituted silicon atom by a divalent oxygen atom, and wherein the silicone pressure sensitive adhesive component wherein the by bodying a mixture of (1) 5 to 70 parts by weight of an organopolysiloxane resinous portion comprising Me₃SiO_{1/2} siloxane units and SiO_{4/2} siloxane units, wherein the mol ratio of the Me₃SiO_{1/2} siloxane units to SiO_{4/2} siloxane units has a value of from 0.5/1 to 1.5/1 and (2) 30 to 95 parts by weight of a polydimethylsiloxane gum having a viscosity at 25°C of from 100,000 to 100,000,000 mPa.s (centipoise) and said method further comprises mixing an effective amount of a catalyst component to accelerate the reaction of the curing radicals with moisture to form siloxane bonds and an effective amount of a silicon compound bearing a plurality of silicon-bonded alkoxy radicals to improve the shelf life of the composition.

The SPSA component bearing curing radicals having the formula Me_{b}(MeO)_{3-b}Si(C₂H₄SiMe₂)ₓ(OSiMe)_{y}D- can be prepared by any method wherein the Y radical of Me_{b}(OMe)_{3-b}SiY reacts with an X radical of an X-substituted SPSA to form (C₂H₄SiMe₂)ₓ(OSiMe₂)yD, as noted above. The method for forming this group of radicals can encompass the reactions of silicon chemistry, such as the reaction of silanols or of silicon hydrides. Conveniently, for this purpose, one can adapt one or more of the several methods which are disclosed in the art for preparing moisture-curable silicone elastomers and/or sealants and U.S. Patent Nos. 3,122,522; 3,161,614 (Re 29,760); 3,175,993; 3,334,067; 4,100,129; 4,395,526; 4,599,394; 4,772,675; 4,847,400; and 4,962,174 show the preparation of moisture-curable compositions which comprise silicon-bonded alkoxy groups and a catalyst.

In particular, the disclosures of Weyenberg, U.S. Patent No. 3,175,993; Lucas, U.S. Patent No. 4,599,394; Klosowski and Meddaugh, U.S. Patent No. 4,772,675; Krahnke and Saam, U.S. Patent No. 4,847,400; and Bilgrien and Berg, U.S. Patent No. 4,962,174 are noted for the preparation of the SPSA component bearing silicon-bonded curing radicals having the formula Me_{b}(MeO)_{3-b}SiC₂H₄SiMe₂(OSiMe₂)_{y}D-wherein y has an average value of from 0 to 6, preferably 0 to 1, each both inclusive.

The SPSA component bearing curing radicals can be prepared by the application of any of the above-noted processes to SPSA compositions and/or to one or more of their several components. Briefly, these methods comprise hydrosilylation reactions and silanol-converting reactions; the latter comprising the reaction of a silanol group with a silicon-bonded hydrolyzable radical such as amine, silylamine, alkoxy, halogen or acyloxy; or with a silicon-bonded hydrogen atom.

For example, (MeO)₃SiCH₂CH₂- radicals and (MeO)₃SiCH₂CH₂SiMe₂OSiMe₂CH₂CH₂- radicals can be introduced into a vinyl radical-containing SPSA component with compounds having the formula (MeO)₃SiH and (MeO)₃SiCH₂CH₂SiMe₂OSiMe₂H, respectively. In this example Y = H or CH₂CH₂SiMe₂OSiMe₂H, respectively, and X = CH₂=CH-.

Radicals having the formulae (MeO)₃SiO- and Me(MeO)₂SiO- can be introduced into a silanol-functional SPSA component with compounds having the formulae (MeO)₄Si and Me(MeO)₃Si, respectively. Alternatively, compounds having the formulae (MeO)₃SiH and Me(MeO)₂SiH, respectively, can be used. In these examples Y = MeO- or H, respectively, and X = OH.

(MeO)₃SiCH₂CH₂SiMe₂O-, (MeO)₃SiCH₂CH₂SiMe₂OSiMe₂O- and (MeO)₃SiCH₂CH₂SiMe₂CH₂CH₂SiMe₂O- radicals can be introduced into a silanol-functional SPSA component by the use of compounds such as (MeO)₃SiCH₂CH₂SiMe₂OSiMe₂H, (MeO)₃SiCH₂CH₂ SiMe₂CH₂CH₂SiMe₂H and (MeO)₃SiCH₂CH₂SiMe₂H.

Most conveniently, the SPSA component bearing curing radicals having the formula Me_{b}(MeO)_{3-b} Si(C₂H₄SiMe₂)ₓ(OSiMe₂)_{y}D is prepared by reacting a silanol-containing SPSA with a moisture-reactive compound having the formula Me_{b}(OMe)_{3-b}SiY wherein Y bears a silicon-bonded hydrolyzable radical such as halogen, acyloxy, amino or amido. In view of the type of by-products that are produced during the reaction, Y preferably bears an amino nitrogen which provides an ammonia by-product.

Silazanes and disilazanes are preferred compounds for introducing the curing radicals into a silanol-functional SPSA, in view of the type of by-products that will be produced during the reaction. Examples of silazanes and disilazanes include (MeO)₃Si (CH₂CH₂SiMe₂)ₓ(OSiMe₂)_{y}NH₂ and {(MeO)₃Si(CH₂CH₂SiMe₂)ₓ(OSiMe₂)_{y}}₂NH, such as {(MeO)₃SiCH₂CH₂ SiMe₂}₂NH. An highly preferred curing radical for the composition of this invention is (MeO)₃SiC₂H₄SiMe₂O- because it can be readily introduced into the SPSA composition by way of a disilazane.

The SPSA component bearing silicon-bonded curing radicals having the formula Me_{b}(MeO)_{3-b} Si(C₂H₄SiMe₂)ₓ(OSiMe₂)_{y}D- can bear any number of curing radicals; the rate and extent of cure of the SPSA composition, when exposed to moisture, being dependent on the concentration of curing radicals.

It is believed at this time that the SPSA component should contain an average of at least 1 millimol, preferably at least 2 millimols, of curing radicals per 100 parts by weight of SPSA component to obtain a desirable rate of cure. On the other hand it is currently believed that the SPSA component should contain no more than 100, preferably no more than 50, millimols of curing radicals per 100 parts of SPSA component to achieve a desirable adhesive strength. Of course, mols and parts are to be expressed in comparable terms. For example, 5 millimols and 100 parts can be expressed as 5 milligram-mols and 100 gram parts or as 5 millipound-mols and 100 pound parts.

Capping radicals having the formula Me₃SiO- can be introduced into the SPSA component by any process wherein the Y′ radical of Me₃SiY' reacts with a silanol radical of a silanol-substituted SPSA to form a siloxane linkage, as noted above. Briefly, these processes comprise the reaction of a compound bearing a a silicon-bonded hydrolyzable radical such as amine, amido, silylamine, halogen or acyloxy; or with a silicon-bonded hydrogen atom.

For example, radicals having the formulae Me₃SiO-can be introduced into a silanol-functional SPSA component with compounds having the formulae Me₃SiCl, Me₃SiOCOCH₃, Me₃SiH, Me₃SiN(CH₃)COCH₃, (Me₃Si)₂NCOCH₃, Me₃SiNH₂, (Me₃Si)₂NH.

In view of the type of by-products that are produced during the reaction Y′ preferably bears an amino nitrogen which provides an ammonia by-product, such as with silazanes and disilazanes, such as Me₃SiNH₂ and (Me₃Si)₂NH. The disclosure of U.S. Patent No. 3,527,659 teaches a preferred method for capping silicon-bonded hydroxyl radicals.

The SPSA component can bear any number of capping radicals. Preferably, the number is sufficient to cap a significant number, most preferably substantially all, of the silanols in the SPSA component. By a significant number of silanols it is meant a number sufficient to provide improved shelf-stability for the composition. It is currently believed that substantially no silanols should remain unreacted in the SPSA component in order to obtain maximum shelf-life.

A suitable reaction catalyst should be used when introducing curing and capping radicals into the SPSA component. For example, when using a silicon hydride it is desirable to use a platinum group metal catalyst such as platinum or rhodium and its compounds and complexes to accelerate the hydrosilylation reaction. When using a silazane it is desirable to use a strong acid catalyst such as trifluoroacetic acid. In certain instances this reaction catalyst can be the same as the curing catalyst, noted above. For example, when using an alkoxysilane to introduce curing radicals it is desirable to use a titanate catalyst, such as tetrabutyl titanate.

In addition to a SPSA component (A) bearing silicon-bonded curing radicals, the compositions of this invention preferably further comprise an effective amount of a catalyst component (B) to accelerate the reaction of the curing radicals with moisture to form siloxane bonds.

Catalysts for accelerating the reaction of the OMe radicals with moisture to form siloxane bonds are well known in the silicone elastomer art and need no detailed delineation herein. Briefly, said catalysts include, but are not limited to, metal salts of monocarboxylic acids, such as stannous octoate, dibutyltin dilaurate and dibutyltin diacetate; titanium esters, such as tetrabutyl titanate, tetraethylhexyl titanate and tetraphenyltitanate; siloxytitanates, such as tetrakis(trimethylsiloxy)titanium and bis(trimethylsiloxy)-bis(isopropnxy)titanium; and betadicarbonyltitanium compounds, such as bis(acetylacetonyl)diisopropyl titanate; amines, such as hexylamine; and their acetate and quat salts.

Preferred catalysts are bis(acetylacetonyl)diisopropyl titanate and certain orthotitanates, such as tetrabutyl titanate and their partial hydrolyzates. The amount of titanium-containing catalysts typically ranges from 0.1 to 2%, based on the weight of the SPSA component.

In addition to a SPSA component bearing silicon-bonded curing radicals (A) and an effective amount of a catalyst component (B) to accelerate the reaction of the curing radicals with moisture to form siloxane bonds the compositions of this invention may further comprise (C) an effective amount of a silicon compound bearing a plurality of silicon-bonded alkoxy radicals to improve the shelf life of the composition.

Component (C) in the compositions of this invention can be any compound bearing two or more, preferably three or more, silicon-bonded alkoxy radicals. Any other silicon-bonded radicals in component (C) are to be selected from the group consisting of divalent oxygen atoms linking silicon atoms, divalent hydrocarbon atoms linking silicon atoms, hydrogen atoms and monovalent hydrocarbon radicals.

The component (C) can be a silane or partial hydrolyzates and/or condensates thereof. Examples of suitable silanes include di-, tri- and tetra-alkoxy silanes wherein the alkoxy radicals are, for example, methoxy, ethoxy, n-propoxy, i-propoxy and butoxy, each used singularly or in mixtures and the other silicon-bonded radicals, if present, include hydrogen; monovalent hydrocarbon, such as alkyl, such as methyl, ethyl, propyl; aryl, such as phenyl and benzyl; and olefinic, such as vinyl and allyl; and polyvalent hydrocarbon, such as ethylene and phenylene. Included herein are orthosilicates, such as ethyl orthosilicate and n-propyl orthosilicate; alkyltrialkoxy silanes, such as methyltrimethoxy silane; alkylene-bis-trialkoxysilanes, such as bis-trimethoxysilylethane; and polysilicates, such as ethyl polysilicate.

The compositions of this invention can be prepared by introducing curing and, optionally, capping radicals of the formulae noted above into a SPSA composition, preferably in solution, to form the SPSA component and thereafter admixing a suitable amount of the silicon component (C) bearing a plurality of silicon-bonded alkoxy radicals and a suitable amount of the catalyst component (B).

The solvent component can be any liquid that will dissolve the SPSA and the curing radical-containing component without adversely reacting therewith in the absence of moisture. Examples of suitable solvents include aromatic hydrocarbons, such as benzene, toluene and xylene; aliphatic hydrocarbons, such as hexane, heptane and cyclohexane; halogenated hydrocarbons such as chlorocarbons; oxygenated solvents such as esters, ketones and lower alcohols; and volatile siloxanes such as hexamethyldisiloxane and cyclopolydimethylsiloxanes.

The compositions of this invention typically, but not necessarily, further comprise an appropriate quantity of a solvent to provide a lower viscosity for, and hence an easier application of, the SPSA composition to various substrates. The amount of solvent is not critical; however, only a sufficient amount to facilitate the preparation, handling and applying of the composition is recommended. The solvent, when used, is preferably used in an amount sufficient to provide a viscosity of from 10,000 to 100,000 mPa.s (centipoise) at 25°C. for the composition.

Concrete examples of this component are the same as those delineated above for use during the preparation of the SPSA component and mixtures thereof. The solvent, when used, is preferably a non-reactive hydrocarbon solvent or siloxane solvent. It has been found convenient, hut not necessary, to prepare the SPSA component in a solvent that can be allowed to remain in the final composition as a viscosity-adjusting solvent.

The compositions of this invention can be used in all of the applications to which the SPSA compositions of the art are directed since they possess adhesive properties in their uncured state, one or more of which will improve upon exposure to ambient moisture. Additionally, the compositions of this invention can be used in all of the applications to which the permanent adhesive compositions of the art are directed since certain embodiments thereof will cure to the permanent adhesive state upon exposure to ambient moisture. It is expected that the compositions of this invention will satisfy other adhesive needs in view of their moisture-activated curing capability.

Typically, the use of the compositions of this invention comprises applying a composition of this invention to a substrate; removing substantially all of the solvent from the applied composition to provide an adhesive-bearing substrate; and adhering the adhesive-hearing substrate to a surface. Optionally, one can expose the adhesive on the adhered substrate to moisture to improve one or more adhesive properties selected from tack, peel adhesion, tensile adhesion, adhesive failure mode, yield modulus and modulus at cohesive failure.

Preferably, a silanol-containing composition of this invention is applied to the substrate and devolatilized before any substantial gelling of the composition occurs. For silanol-containing compositions of this invention comprising a catalyst component it is recommended that the composition be prepared within a day or two of being applied to the substrate and devolatilized.

The solvent-containing, silanol-free compositions of this invention, whether catalyzed or uncatalyzed, can be stored in the absence of moisture for extended periods of time without experiencing any substantial gelling.

Thereafter it is preferred to apply the adhesive-bearing substrate to the surface before the adhesive has experienced a complete loss of tack. It is recommended that the adhesive-bearing substrate be applied to the surface within a few days to a few weeks after being prepared. If there is any delay in applying the adhesive-bearing substrate to the surface it is recommended to maintain the adhesive under substantially anhydrous conditions.

The solvent-containing compositions of this invention which are silanol-free and contain Component (C), whether catalyzed or uncatalyzed, can be stored in the absence of moisture for extended periods of time without experiencing any substantial gelling. Accordingly, they can be prepared months prior to being used.

Advantageously, the solvent-free compositions of this invention which are silanol-free and contain Component (C), whether catalyzed or uncatalyzed, can be stored, for example as a transfer film, in the absence of moisture for extended periods of time without experiencing any substantial loss of adhesive properties. Accordingly, they can be prepared up to several months prior to being exposed to moisture. After being exposed to moisture it is preferred to apply the adhesive-bearing substrate to the surface before the adhesive has experienced a complete loss of tack.

The substrate and surface can have any solid form and can comprise any material. Examples of suitable forms include decorative articles, devices and mechanical parts in elastomer, foam, flexible or rigid consistency. Examples of suitable materials include ferrous and non-ferrous metals, such as aluminum, iron, copper, tin, silver, gold, platinum and their several alloys; synthetic polymeric materials, such as polyolefins, polyesters, polyamides, polyacrylates, polyfluoroolefins and polysiloxanes; cellulosic materials, such as paper and wood; textile materials, such as cotton and its blends; and siliceous materials, such as glass, cement, concrete, brick, ceramic, porcelain, china, quartz and crystal.

The following disclosure is to illustrate, but not limit, the present invention, which is properly delineated by the appended claims. Unless stated otherwise, all ratios, parts and percentages are by weight and temperatures are in degrees Celsius.

Unless otherwise stated, a 50% solution of SPSA was cast onto 51µm (2-mil) Mylar (R), drawn down with a 76 µm (3 mil) bird bar (Gardner Pacific) and the film was heated at 70°C for 3 minutes to remove volatile material and provide a dry adhesive thickness of 38.1 µm (1.5 mils).

Peel adhesion (Adh) of a SPSA was measured by applying a 152.4 mm × 25.4 mm (6" x 1") strip of the Mylar-backed adhesive to a clean 50.8 mm x 152.4 mm (2" x 6") stainless steel panel using two passes of a 2 kg rubber-coated roller. The force required to remove the tape therefrom was measured with a Keil Tester at a peel angle of 180° at a rate of 30.5 cm/min (12 inches/minute). The values recorded are the average of multiple readings taken during the course of one pull per sample. The Keil Tester is described in TAPPI, vol. 43, No. 8. pages 164A and 165A (August 1960).

Tack was measured on 6 -25.4 mm (1") squares of the Mylar-backed adhesive using a POLYKEN (R) brand probe tack tester (Testing Machines, Inc,; Amityville, NY). The test procedure used a 20 gram weight, a dwell time of 0.5 seconds and a pull speed of 0.5 cm/sec. and the results are the average of the six readings expressed in units of grams.

Tensile Adhesion (TA) was measured in accordance with ASTM C 1135-90, "Standard Test Method for Determining Tensile Adhesion of Structural Sealants", except as follows: the test specimens were conditioned at 23°C. for 0, 3, 7, 14, 28, 30, 60 and/or 90 days, in addition to the 21 days required by ASTM C 1135-90; and the test specimens were assembled with an adhesive-bearing core of cured silicone rubber, rather than a solid plug of sealant, which was cured in contact with the panels of the test specimen.

For Examples 1-13, the silicone rubber core was one-half of an honeycombed extrusion of cured silicone rubber having a durometer of 70 and dimensions of 25.4 × 12.7 mm (1"h x 1/2"w) x 50.8 mmL (2"l) and having 17 cylindrical holes, 2.4 mm i.d. × 50.8 mmL (3/32" i.d. x 2"l), arranged in three columns of 6, 5 and 6 holes, evenly spaced. The extrusion was cut in half along its width to produce the core having dimensions of 12.7 mmh × 12.7 mmw × 50.8 mmL (1/2"h x 1/2"w x 2"l) and having 8 cylindrical holes in the body of the core and 1 semi-cylindrical groove along one non-bonding surface of the core. The bonding surfaces were adjacent to the groove-bearing surface.

For Examples 14-33 two cores were used. Core #1 was the same as the core used in Examples 1-13. Core #2 was an extrusion of cured silicone rubber having a durometer of 70 and a "cinder block form" cross section with dimensions of 9.5 mmh × 12.7 mmw × 50.8 mmL (3/8"h x 1/2"w x 2"l) and the 2 rectangular holes having dimensions of 6.4 mmh × 2.4 mm i.d. × 50.8 mmL (1/4"h x 3/32"w x 2"l). The bonding surfaces of the core were the opposing 12.7 mm (1/2") wide surfaces.

For Examples 1-33 the adhesive-bearing core was prepared by one of two methods, i.e., the Core Coating method or the Transfer Film method.

In the core coating method a solution of SPSA was applied to both bonding surfaces of the core of silicone rubber, at a wet thickness of 254 µm (10 mils) and devolatilized at 70°C. to provide the adhesive-bearing core. To assemble the test specimen the exposed adhesive surfaces were adhered to the 25.4 mm × 76.2 mm (1" x 3") panels of the test specimen.

In the transfer film method, a solution of SPSA was applied to a release liner in a wet thickness of 254 µm (10 mils), unless stated otherwise, and the applied solution was devolatilized at 70°C. for 5 minutes. To assemble the adhesive-bearing core the devolatilized SPSA, with its release liner, was adhered to one bonding surface of the silicone rubber core. The process was repeated on the other bonding surface of the core. To assemble the test specimen the release liners were removed from the transferred adhesive and the exposed adhesive surfaces were adhered to the 25.4 mm × 76.2 mm (1" x 3") panels of the test specimen.

For Examples 34-56 the core was a cured extrusion of cured silicone rubber having a cinder block cross section with dimensions of 9.5 mmh × 12.7 mmw × 50.8 L (3/8"h x 1/2"w x 2"l) and the 2 rectangular holes having dimensions of 12.7 mmh × 2.4 mmw × 50.8 mmL (1/4"h x 3/32"w x 2"l). The bonding surfaces of the core were the opposing 12.7 mm (1/2") wide surfaces, having 645.2 mm² (1 in²) area.

The adhesive-bearing core for Examples 34-56 was prepared by applying a solution of SPSA to a release liner in a wet thickness of 508 µm (20 mils), unless stated otherwise, and devolatilizing the applied solution at 70°C. for 10 minutes in an air-circulating oven. To assemble the adhesive-bearing core a 12.7 mm (1/2") wide strip of adhesive film, with its release liner, was adhered to one bonding surface of the silicone rubber core. The process was repeated on the other bonding surface of the core. To assemble the test specimen the liners were removed from the transferred adhesive and the exposed adhesive surfaces were adhered to the 25.4 mm × 6.72 mm (1" x 3") panels of the test specimen.

Liner Release (Rel) was determined by cutting a laminate, consisting of SPSA cast onto a Mylar-backed fluorosilicone release coating and laminated to 50.8 µm (2-mil) Mylar backing, into 25.4 mm (1 inch) wide strips and pulling the laminate apart at the adhesive/release coating interface at a rate of 30.5 cm/min (12 inches/minute) using a Keil Tester, noted above.

Subsequent Adhesion (SA) was measured as noted above for peel adhesion, except using an adhesive that had been removed from a fluorosilicone release liner. SA is expressed in units of kg/m (ounces/inch, oz/in).

Subsequent Tack (ST) was measured as noted above for the measurement of tack, except using an adhesive that had been removed from a fluorosilicone release liner. ST is expressed in units of grams.
TBT - Tetrabutyl titanate.
MTM - Methyltrimethoxy silane.
TDIDE - Titanium diisopropoxy-bis(ethylacetoacetate).
TFAA - Trifluoroacetic acid.
HMDZ - Hexamethyldisilazane.
SSA2 - A reaction product of tetraisopropyl titanate and an equimolar mixture of mono- and di-2-ethylhexyl acid phosphate, available as Tilcom-SSA2 from Tioxide House, London, U.K.
KR238 - An adduct of dioctyl hydrogen phosphite and titanium bis(dioctyl)pyrophosphato-O-ethylenediolato.
ETMDZ(C) - A reaction mixture of 15.6% non-silazane materials comprising 5% starting materials and 10.6% {(MeO)₃SiCH₂}₂; 79.8% silazane materials comprising 10.6% {(MeO)₃SiC₂H₄SiMe₂NHSiMe₂CH₂}₂, 69.2% {(MeO)₃SiC₂H₄SiMe₂}₂NH and 4.6% unidentified products; prepared by adding tetramethyldisilazane to a mixture of vinyltrimethoxy silane and chloroplatinic acid complexed with divinyltetramethyldisiloxane.
ETMDZ(F) - Substantially pure {(MeO)₃SiC₂H₄SiMe₂}₂NH, prepared by fractionating ETMDZ(C).
ETMDZ(D) - A mixture of 11.6% non-silazane materials comprising 1.4% unidentified by-products and 10.2% {(MeO)₃SiCH₂}₂, and 88.4% silazane materials comprising 1.8% {(MeO)₃SiC₂H₄SiMe₂NHSiMe₂CH₂}₂ and 86.5% isomers having the formula {(MeO)₃SiC₂H₄SiMe₂}₂NH; prepared by distilling ETMDZ(C).
ETMSH - A mixture of (MeO)₃SiC₂H₄SiMe₂OSiMe₂H, 96%; 2% vinyltrimethoxy silane and 2% tetramethyldisiloxane, prepared by adding vinyltrimethoxy silane to a mixture of tetramethyldisiloxane and chloroplatinic acid complexed with divinyltetramethyldisiloxane and distilling the reaction product.
Polymer A - An hydroxyl-terminated polydimethylsiloxane gum having a plasticity number of 137-152, as measured by ASTM 926-67, and a viscosity of at least 10,000,000 mPa.s (centipoise) at 25°.
Polymer B - An hydroxyl-terminated polydimethylmethylvinylsiloxane gum having 4 mol% vinyl-containing siloxane units, a plasticity number of 137-152, as measured by ASTM 926-67, and a viscosity of at least 10,000,000 mPa.s (centipoise) at 25°.
Solution A - A xylene solution containing 70% of a soluble organopolysiloxane consisting of (CH₃)₃SiO_{1/2} units and SiO_{4/2} units in a mol ratio of 0.8/l and having a hydroxyl content of 3.45% and Mₙ = 1,963, M_{w}/Mₙ = 2.57 as measured by gel-permeation chromatography using Varian TSK 4000+2500 columns at 35°C, a chloroform mobile phase at 1 mL/m and an IR detector set at 8.5 microns to detect SiO₂. Polystyrene standards were used for linear regression calibrations.
Solution B - A SPSA composition containing 45% xylene and volatile siloxanes and 55% of a bodied SPSA consisting of 55% of the organopolysiloxane resin of Solution A and 45% of OH-endblocked polydimethylsiloxane gum having a plasticity of about 150 and a silicon-bonded hydroxyl content of 0.45% (26 milligram-mols of silanol per 100 grams of bodied SPSA solids).
Solution C - A SPSA composition having a silicon-bonded hydroxyl content of 0.45% and containing 45% xylene and volatile siloxanes and 55% of a bodied SPSA consisting of 55% of the organopolysiloxane resin of Solution A and 45% of OH-endblocked polydimethylsiloxane gum having a plasticity of about 60.

### Example 1

Solution A, 98.5 parts; Polymer A, 56.3 parts, and xylene, 149.9 parts, were mixed to homogeniety and a mixture of 39.4 parts of MTM and 0.15 parts of TBT was added thereto. The resulting mixture was heated from 90°C to 141°C over a 4.5 hour period as 112.6 parts of volatile material were distilled from the mixture. The solution was cooled to room temperature and stored in the absence of moisture for two days. The resulting SPSA composition bearing Me(MeO)₂SiO-curing radicals was then tested for tack and adhesive strength at several levels of TBT or TBT plus additional MTM after 1 and 7 days exposure to ambient moisture. All adhesives had poor cohesive strength immediately after being catalyzed; however, the increased peel adhesion results after 1 and 7 days, shown in Table I, indicate that a curing reaction occurred in the presence of moisture. Additionally, where cohesive failure existed in the 1-day old adhesive an improvement to adhesive failure was obtained.

### Example 2

Solution A, 86.4 parts; Polymer A, 66.7 parts, and xylene, 153.6 parts, were mixed to homogeniety and a mixture of 34.6 parts of MTM and 0.13 parts of TBT was added thereto. The resulting mixture was heated from 90°C to 137°C over a 4.25 hour period as 87.6 parts of volatile material were distilled from the mixture. The solution was cooled to room temperature and gummy material was stored in the absence of moisture for 3 days. The resulting SPSA composition bearing Me(MeO)₂SiO- curing radicals was then tested for tack and adhesive strength at several levels of TBT, or TBT plus additional MTM, after 1 and 7 days exposure to ambient moisture. All adhesives had poor cohesive strength immediately after being catalyzed; however, the results after 1 and 7 days, shown in Table I, indicate that an increase in peel adhesion occurred in the presence of moisture. Additionally, where cohesive failure existed in the 1-day old adhesive an improvement was obtained in a majority of compositions after 7 days of exposure to moisture.

**TABLE I**

| MTM, % | TBT, % | Example 1 | | | | Example 2 | | | |
|---|---|---|---|---|---|---|---|---|---|
| | | 1 Day | | 7 Days | | 1 Day | | 7 Days | |
| | | Tack | Adh | Tack | Adh | Tack | Adh | Tack | Adh |
| 0.0 | 0.0 | 508 | 3a | 464 | 15 | 456 | 16c | 577 | 46c |
| 0.0 | 0.25 | 576 | 19a | 481 | 45a | 498 | 22c | 665 | 56c |
| 0.0 | 0.5 | 643 | 31a | 604 | 55a | 506 | 26c | 663 | 30a |
| 0.0 | 1.0 | 752 | 30a | 729 | 40a | 510 | 26c | 676 | 49b |
| 2.5 | 0.25 | 555 | 27c | 534 | 42a | 522 | 23c | 670 | 51c |
| 5.0 | 0.5 | 707 | 24a | 579 | 42a | 561 | 27c | 717 | 40a |
| 10.0 | 1.0 | 630 | 25a | 628 | 31a | 568 | 28c | 731 | 30a |

| | | | | | | | | | |
|---|---|---|---|---|---|---|---|---|---|
| a = adhesive failure; | | | | | | | | | |
| c = cohesive failure; | | | | | | | | | |
| b = cohesive and adhesive failure. | | | | | | | | | |

### Examples 3-5

A mixture of 75 parts Polymer B, 142.6 parts Solution A, 60 parts toluene and 0.6 parts of an acetylenic alcohol was heated at reflux (124°C) for 5 hours to body the SPSA. Three portions of the bodied SPSA solution were separated and treated with 4.89% (Example 3), 6.12% (Example 4) or 7.34% (Example 5) of ETMSH, based on SPSA solids to convert various amounts of vinyl radicals to curing radicals. Each portion was mixed with one part of platinum catalyst per 100 parts of ETMSH and allowed to stand at room temperature overnight. All gelled in the vial after one week at room temperature; however, before the compositions gelled portions were used to make adhesive films as follows. Method 1 (Examples 3*, 4* & 5*) consisted of casting the composition on a backing and evaporating the solvent, i.e., no moisture-curing catalyst was used. Method 2 (Examples 3, 4 & 5) was the same as Method 1, except a percentage of titanium catalyst, based on SPSA solids, was used as a moisture-curing catalyst. The results of the tack and adhesion measurements, taken on the solvent-free adhesive films after 0 days, 1 day and 7 days of exposure to atmospheric moisture are listed in Table II. All compositions experienced cure to less tacky adhesives with catalyzed compositions curing faster than uncatalyzed compositions.

**TABLE II**

| Example | H/Vi | TDIDE | 0 Days | | 1 Day | | 7 Days | |
|---|---|---|---|---|---|---|---|---|
| | | | Tack | Adh | Tack | Adh | Tack | Adh |
| 3 | 0.8/l | 2% | 754 | 29 | 699 | 32 | 505 | 30 |
| 4 | 1.0/l | 2% | 695 | 23 | 686 | 28 | 495 | 20 |
| 5 | 1.2/l | 2% | 692 | 29 | 697 | 28 | 518 | 24 |
| 3* | 0.8/l | 0% | 842 | 43 | 774 | 45 | 638 | 37 |
| 4* | 1.0/l | 0% | 824 | 44 | 712 | 42 | 659 | 34 |
| 5* | 1.2/l | 0% | 923 | 45 | 874 | 47 | 710 | 33 |

| | | | | | | | | |
|---|---|---|---|---|---|---|---|---|
| * Composition not catalyzed. | | | | | | | | |

### Examples 6-12

Under a dry nitrogen sweep appropriate amounts (listed in Table III) of ETMDZ(D), except ETMDZ(F) for Examples 9 and 10 and TFAA were dissolved in Solution B and the solutions were heated at 100°C for about one hour to react the percentage of SPSA silanols indicated in Table III.

The resulting compositions of this invention containing approximately 40-50% solvent were catalyzed with 1% TBT, based on solution weight, and the catalyzed compositions were tested for tack, peel adhesion and tensile adhesion properties after being exposed to ambient moisture in accordance with the methods described above. The uncatalyzed compositions also were similarly tested. The results have been summarized in Tables III and IV.

The stress/strain behavior of some of the compositions which were maintained in the absence of moisture are summarized in Table V. Test samples for measuring stress/strain behavior were prepared by casting catalyzed SPSA solutions at a wet thickness of 1270 µm (50 mils) onto a release liner and gradually removing the solvent over a period of 20 hours and over a temperature range of from 20-70°C. A dog bone shape die (Dewes-Gumbs Die Company) with a 25.4 mm (1") gauge length and a 6.4 mm (1/4") gauge width was used to stamp test samples from the SPSA film/release liner laminate. The SPSA film was carefully peeled from the liner without deforming the SPSA film and secured into an Instron tester by its tabs so as to provide a 25.4 mm (1") gauge length. The sample was pulled at a rate of 254 mm (10"/minute) and the force was recorded on an X-Y recorder. Stress was calculated by dividing the force output by test sample cross-section. Strain was approximated by dividing the distance the crosshead traveled by the initial gauge length and multiplying by 100.

An examination of the data in Table III shows that catalyzed compositions wherein at least 0.2 mols of {(MeO)₃SiC₂H₄Me₂}₂NH per mol of silanol in the SPSA is reacted with the SPSA rapidly cure to a adhesives having little or no tack and/or adhesion; i.e., permanent adhesives.

Table IV shows that the compositions of this invention are sufficiently strong to be useful as a structural glazing adhesive when applied either directly to the core or transferred to the core as an adhesive film. Contrastingly, the control composition (i) is not sufficiently strong, initially or after 14 days exposure to ambient moisture, to be useful as a structural glazing adhesive when applied by either the direct or transfer manner.

Table V shows that the compositions which have a greater percentage of residual hydroxyl groups on the SPSA experience a greater change in yield stress and have a lesser stability when catalyzed.

**Table III**

| Ex | ETMZ Amount | | 0 Days | | 7 Days | | 21 Days | |
|---|---|---|---|---|---|---|---|---|
| | Mol%* | grams | Tack | Adh | Tack | Adh | Tack | Adh |
| 6 | 10 | 0.917 | 929 | 47 | 1014 | 53 | 647 | 49 |
| 7 | 20 | 1.839 | 336 | 39 | 210 | 28 | 25 | 26 |
| 8 | 25 | 2.298 | 248 | 2 | 0 | 5 | 0 | 1 |
| 9 | 35 | 2.653 | 378 | 44 | 28 | 7 | 28 | 3 |
| 10 | 45 | 3.414 | 280 | 44 | 25 | 1 | 14 | 1 |
| 11 | 55 | 5.053 | 310 | 37 | 0 | 1 | 0 | 1 |
| 12 | 75 | 6.894 | 462 | 39 | 7 | 1 | 0 | 1 |
| | | | | | | | | |
| 6** | 10 | 0.917 | 1097 | 35 | 958 | 48 | 633 | 51 |
| 7** | 20 | 1.839 | 1092 | 38 | 874 | 44 | 663 | 50 |
| 8** | 25 | 2.298 | 803 | 21 | 560 | 30 | 360 | 30 |
| 9** | 35 | 2.653 | 1065 | 42 | 942 | 53 | 724 | 56 |
| 10** | 45 | 3.414 | 1105 | 43 | 768 | 48 | 751 | 44 |
| 11** | 55 | 5.053 | 930 | 44 | 433 | 33 | 137 | 5 |
| 12** | 75 | 6.894 | 959 | 40 | 539 | 26 | 335 | 20 |

| | | | | | | | | |
|---|---|---|---|---|---|---|---|---|
| * Based on mols of silanol in SPSA. | | | | | | | | |
| ** Composition not catalyzed. | | | | | | | | |

**Table IV**

| Ex | 0 Days | | 3 Days | | 7 Days | | 14 Days | | Comments |
|---|---|---|---|---|---|---|---|---|---|
| | TA, (psi) | kPa | TA, (psi) | kPa | TA, (psi) | kPa | TA, (psi) | kPa | |
| 6 | (71.8) | 495.0 | (84.7) | 584.0 | (105.0) | 723.9 | (96.9) | 668.1 | Core coating |
| 7 | (71.5) | 493.0 | - | | (62.4) | 430.2 | (44.3) | 305.4 | Core coating |
| 8 | (67.8) | 467.5 | (89.3) | 615.7 | (82.4) | 568.1 | (80.6) | 555.7 | Core coating |
| 12 | (63.2) | 435.7 | (116.4) | 802.6 | (116.7) | 804.6 | (93.1) | 641.9 | Core coating |
| | | | | | | | | | |
| 6 | (71.0) | 489.5 | - | | (78.6) | 541.9 | (90.4) | 623.3 | Transfer film |
| 10 | (77.7) | 535.7 | (102.3) | 705.3 | (101.8) | 701.9 | (114.9) | 792.2 | Transfer film |
| 12 | (106.7) | 735.7 | (119.6) | 824.6 | (119.1) | 821.2 | (126.0) | 868.7 | Transfer film |
| | | | | | | | | | |
| 6* | (40.5) | 279.2 | (52.0) | 358.5 | (58.6) | 404.0 | (54.2) | 373.7 | Core coating |
| 7* | (63.2) | 435.7 | (71.6) | 493.7 | (71.1) | 420.2 | (70.3) | 484.7 | Core coating |
| i* | (29.6) | 204.1 | (56.5) | 389.6 | (51.0) | 351.6 | (54.6) | 376.5 | Core coating |
| | | | | | | | | | |
| i* | (35.6) | 245.5 | (49.1) | 338.5 | (34.2) | 235.8 | (44.1) | 304.1 | Transfer film |

| | | | | | | | | | |
|---|---|---|---|---|---|---|---|---|---|
| * Composition not catalyzed; | | | | | | | | | |
| i = Solution B adhesive. | | | | | | | | | |

**Table V**

| Example | Yield Stress (psi)/Strain(%) | | Comments |
|---|---|---|---|
| | Catalyzed | Uncatalyzed | |
| 6 | 247.7/10 | 64.5/10 | Not enough capping to be stable. |
| 7 | - | 86.2/10 | |
| 8 | 117.4/20 | 125.2/10 | Fully stable. |
| 9 | 106.3/20 | 90.4/20 | Some instability. |

### Example 13

A mixture of 107.8 parts of Solution A, 45.2 parts of MTM (2 molecules of silane for each silanol in the resin) and 3 parts of TDIDE was allowed to react at room temperature for 2 days to silylate silanols in the resin. A SPSA composition of this invention was prepared by mixing to homogeniety 156 parts of the silylated resin solution, 83 parts of toluene, 59.3 parts of Polymer B and 1% TDIDE, based on gum plus resin solids. The composition was tested for adhesive properties immediately and after 21 days. Tack was found to have decreased from 620 to 240 grams, indicating that a curing reaction occurred in the presence of moisture and peel adhesion was found to have increased from 22.3 to 50.2 kg/m (20 to 45 ounces per inch).

### Examples 14-18

A mixture of 86.2 parts Polymer B, 126 parts Solution A and 82 parts toluene was heated at reflux (124°C) for 3 hours to body the SPSA. To cap all residual silanols 4.8 parts of HMDZ was added to the reaction mixture and refluxing was continued for one hour. Five portions of the bodied and capped SPSA were separated and treated with either 3.59% (Examples 14 & 15) or 5.52% (Examples 16-18) of ETMSH, based on SPSA solids to convert vinyl radicals to curing radicals. One part of platinum catalyst per 100 parts of ETMSH was added and the mixture was allowed to stand at room temperature overnight. The material of Examples 14, 17 and 18 gell in the vial after five days at room temperature. The material of Examples 15 and 16 did not gell in the vial before forty days at room temperature.

The five compositions were used to make adhesive films by Method 1 (Example 14) and Method 2 (Example 15-18). Method 1 consisted of casting the composition on a backing and evaporating the solvent, i.e., no moisture-curing catalyst was used. Method 2 was the same as Method 1, except a percentage of TBT catalyst, based on SPSA solids, was used as a moisture-curing catalyst. The results of the tack and adhesion measurements, taken on the solvent-free adhesive film after various amounts of exposure to atmospheric moisture are listed in Table VI.

### Examples 19-22

A mixture of 172.3 parts Polymer B, 251.9 parts Solution A and 175.8 parts toluene was heated at reflux (124°C) for 3 hours to body the SPSA. Two 179 part portions of the bodied SPSA solution were separated for capping with HMDZ under two processes. In the room temperature capping process (Examples 19 & 20), a mixture of 4.59 parts of HMDZ and 0.36 parts of TFAA was mixed with one of the portions and the mixture was allowed to react at room temperature over the weekend. In the high temperature capping process (Examples 21 & 22) a mixture of 4.59 parts of HMDZ and 0.36 parts of TFAA was mixed with one of the portions and the mixture was heated at 110°C for 1 hour. A portion of each of the bodied and capped SPSA solutions was separated and treated at room temperature with 5.81% of ETMSH and 0.06% platinum catalyst, both percentages bared on SPSA solids, to convert vinyl radicals to curing radicals. The materials did not gell in the vial after three days at room temperature. The compositions were used to make adhesive films by Method 1 (Example 19 & 21) and Method 2 (Examples 20 & 22), noted above. The results of the tack and adhesion measurements, taken on the solvent-free adhesive film after various amounts of exposure to atmospheric moisture are listed in Table VI.

All compositions are experiencing changes in adhesive properties and are appearing to cure to a tackless SPSA.

**TABLE VI**

| Example | ETMSH* | TBT | 1 Day | | 7 Days | | 21 Days | |
|---|---|---|---|---|---|---|---|---|
| | | | Tack | Adh | Tack | Adh | Tack | Adh |
| 14 | 7 | 0% | 824 | 39 | 1245 | 50 | 988 | 42 |
| 15 | 7 | 1% | 1175 | 49 | 806 | 42 | 659 | 34 |
| 16** | 11 | 1% | 862 | 43 | 715 | 39 | 601 | 27 |
| 17** | 11 | 2% | 840 | 45 | 707 | 34 | 465 | 24 |
| 18** | 11 | 5% | 795 | 47 | 542 | 40 | 285 | 19 |
| 19*** | 21 | 0% | 648 | 17 | 470 | 11 | 430 | 7 |
| 20*** | 21 | 1% | 614 | 16 | 294 | 3 | 242 | 2 |
| 21*** | 21 | 0% | 351 | 14 | 511 | 8 | 430 | 4 |
| 22*** | 21 | 1% | 439 | 11 | 140 | 2 | - | - |

| | | | | | | | | |
|---|---|---|---|---|---|---|---|---|
| * Millimols per 100 parts of SPSA | | | | | | | | |
| ** 0 and 5 day data, instead of 1 and 7 data day. | | | | | | | | |
| *** 0 and 14 day data, instead of 1 and 21 day data. | | | | | | | | |

### Examples 23-25

Under a dry nitrogen sweep appropriate amounts (listed in Table VIII) of ETMDZ(D) and TFAA were dissolved in Solution C and the solutions were heated at 100°C for about one hour to convert the percentage of SPSA silanols to (MeO)₃SiC₂H₄Si(Me₂)O- curing radicals as indicated in Table VII to provide Comparison Examples ii, iii and iv. Examples 23, 24 and 25 were prepared by taking portions of the comparison examples, cooling the portions to 60°C and adding 1 mol of HMDZ per mol of SiOH originally present in Solution C and heating the reaction mixtures at 100°C for an additional hour to cap any remaining silanols of the adhesive to unreactive trimethylsiloxy groups.

The six resulting compositions containing approximately 40-50% solvent were catalyzed with 1% TBT, based on solution weight, and the catalyzed compositions were tested for tack and peel adhesion (Table VII), liner release, subsequent peel adhesion and subsequent tack (Table VIII) and tensile adhesion (Table IX) in accordance with the methods described above. Core #1 was used to obtain the tensile adhesion data. The uncatalyzed compositions were similarly tested, except omitting tensile adhesion testing.

The core coating specimens of Comparison Example ii and Example 25 were also subjected to 90 TA day testing. Those results are summarized in Table XIV.

Tables IX and XIV show that the compositions of this invention are sufficiently strong, initially and after 90 days exposure to ambient moisture, to be useful as a structural glazing adhesive when applied either directly to the tape core or transferred to the tape core as an adhesive film. Contrastingly, the control composition (ii) is not sufficiently strong, initially or after 4 days exposure to ambient moisture, to be useful as a structural glazing when applied by either the direct or transfer manner.

**TABLE VII**

| Ex | Disilazane, M%* | | 0 Days | | 7 Days | | 21 Days | |
|---|---|---|---|---|---|---|---|---|
| | Curing | Capping | Tack | Adh | Tack | Adh | Tack | Adh |
| ii | 10 | 0 | 929 | 47 | 1014 | 53 | 647 | 49 |
| 23 | 10 | 100 | 1200 | 49 | 975 | 26 | 641 | 52 |
| iii | 20 | 0 | 336 | 39 | 210 | 28 | 25 | 26 |
| 24 | 20 | 100 | 663 | 20 | 544 | 51 | 278 | 33 |
| iv | 25 | 0 | 248 | 2 | 0 | 5 | 0 | 1 |
| 25 | 25 | 100 | 685 | 20 | 499 | 28 | 230 | 16 |
| ii** | 10 | 0 | 1097 | 35 | 958 | 48 | 633 | 51 |
| 23** | 10 | 100 | 1170 | 45 | 914 | 58 | 807 | 58 |
| iii** | 20 | 0 | 1092 | 38 | 874 | 44 | 663 | 50 |
| 24** | 20 | 100 | 1013 | 29 | 448 | 42 | 306 | 47 |
| iv** | 25 | 0 | 803 | 21 | 560 | 30 | 360 | 30 |
| 25** | 25 | 100 | 982 | 34 | 432 | 29 | 303 | 42 |

| | | | | | | | | |
|---|---|---|---|---|---|---|---|---|
| * Mols of disilazane per mol of silanol in the SPSA. | | | | | | | | |
| ** Composition not catalyzed. | | | | | | | | |

**TABLE VIII**

| Ex | % OH Conv | Amount, gram | | 0 Days | | | 7 Days | | | 21 Days | | |
|---|---|---|---|---|---|---|---|---|---|---|---|---|
| | | ETMDZ | HMDZ | ST | SA | Rel | ST | SA | Rel | ST | SA | Rel |
| ii | 20 | 0.917 | - | 895 | (44) 49 | 30 | 574 | (42) 47 | 50 | 341 | (31) 35 | 180 |
| 23 | 100 | 0.920 | 8.61 | 1099 | (43) 48 | 5 | 981 | (42) 47 | 30 | 812 | (42) 47 | 50 |
| iii | 40 | 1.839 | - | 430 | (39) 44 | 20 | 346 | (39) 44 | 35 | 231 | (31) 35 | 50 |
| 24 | 100 | 1.837 | 8.56 | 686 | (24) 27 | 0 | 582 | (13) 15 | 30 | 469 | (31) 35 | 30 |
| iv | 50 | 2.298 | - | 371 | (6) 7 | 0 | 167 | (2) 2 | 35 | 44 | (23) 26 | 45 |
| 25 | 100 | 2.298 | 8.51 | 728 | (26) 29 | 0 | 631 | (24) 27 | 30 | 487 | (42) 47 | 35 |
| ii* | 20 | 0.917 | - | 1113 | (36) 40 | 20 | 1014 | (41) 46 | 3 | 769 | (46) 51 | 25 |
| 23* | 100 | 0.920 | 8.61 | 1166 | (39) 44 | 25 | 976 | (52) 58 | 11 | 500 | (46) 51 | 35 |
| iii* | 40 | 1.839 | - | 957 | (37) 41 | 20 | 816 | (38) 42 | 12 | 436 | (26) 29 | 160 |
| 24* | 100 | 1.837 | 8.56 | 967 | (30) 33 | 20 | 879 | (38) 42 | 20 | 726 | (45) 50 | 25 |
| iv* | 50 | 2.298 | - | 947 | (27) 30 | 20 | 700 | (32) 36 | 34 | 8 | (7) 82 | 280 |
| 25* | 100 | 2.298 | 8.51 | 1068 | (30) 33 | 25 | 841 | (41) 46 | 20 | 506 | (45) 50 | 30 |

| | | | | | | | | | | | | |
|---|---|---|---|---|---|---|---|---|---|---|---|---|
| * Composition not catalyzed. | | | | | | | | | | | | |

**TABLE IX**

| Ex | 0 Days | | 3 Days | | 7 Days | | 14 Days | | Comments |
|---|---|---|---|---|---|---|---|---|---|
| | TA, (psi) | kPa | TA, (psi) | kPa | TA, (psi) | kPa | TA, (psi) | kPa | |
| ii | (71.8) | 495.0 | (84.7) | 584.0 | (105.0) | 723.9 | (96.9) | 668.1 | Core coating |
| 23 | (48.8) | 336.5 | (62.2) | 428.9 | (74.1) | 510.9 | (74.1) | 510.9 | Core coating |
| iii | (71.5) | 493.0 | - | - | (62.4) | 430.2 | (44.3) | 305.4 | Core coating |
| 24 | (67.3) | 464.0 | (88.0) | 606.7 | (101.9) | 702.6 | (113.0) | 779.1 | Core coating |
| iv | (67.8) | 467.5 | (89.3) | 615.7 | (82.4) | 568.1 | (80.6) | 555.7 | Core coating |
| 25 | (70.7) | 487.5 | (82.5) | 568.8 | (104.4) | 719.8 | (147.6) | 1017.7 | Core coating |
| ii* | (40.5) | 279.2 | (52.0) | 358.5 | (58.6) | 404.0 | (54.2) | 373.7 | Core coating |
| iii* | (63.2) | 435.7 | (71.6) | 493.7 | (71.1) | 490.2 | (70.3) | 484.7 | Core coating |
| v* | (29.6) | 204.1 | (56.5) | 389.6 | (51.0) | 351.6 | (54.6) | 376.4 | Core coating |
| ii | (71.0) | 489.5 | - | - | (78.6) | 541.9 | (90.4) | 623.3 | Transfer film |
| 23 | (54.0) | 372.3 | (67.4) | 464.7 | (74.3) | 512.3 | (63.2) | 435.7 | Transfer film |
| 24 | (80.1) | 552.3 | (65.6) | 452.3 | (78.5) | 541.2 | (90.9) | 626.7 | Transfer film |
| v* | (35.6) | 245.5 | (49.1) | 338.5 | (34.2) | 235.8 | (44.1) | 304.1 | Transfer film |

| | | | | | | | | | |
|---|---|---|---|---|---|---|---|---|---|
| * Composition not catalyzed; | | | | | | | | | |
| v= Adhesive from Solution C. | | | | | | | | | |

### Examples 26-30

Solution A and Polymer A were mixed in five different ratios and the five mixtures were heated for 5 hours at reflux and then cooled to 80-100°C, whereupon 8.15% of ETMDZ(C) and 0.36% of TFAA, each amount based on adhesive solids, were added to convert 60% of the adhesive silanols to curing radicals and the mixtures were heated at 100°C for 1 hour. The reaction mixtures were again cooled to 80-100°C and 6.9%, based on solids, of HMDZ was added to cap the remaining adhesive silanols and the mixtures again heated at 100°C for 1 hour.

The resulting compositions of this invention containing approximately 45-50% solvent were catalyzed with 1% TBT, based on solids, and the catalyzed compositions were tested for tack, peel adhesion, subsequent peel adhesion, subsequent tack and liner release (Table X) and tensile adhesion (Table XI) in accordance with the methods described above. Core #1 was used to obtain the tensile adhesion data.

The core coating specimen of Example 29 was also subjected to 90 TA day testing. Those results are summarized in Table XIV.

Table XI shows that the compositions of this invention having various resin/polymer ratios are sufficiently strong, initially and after 90 days exposure to ambient moisture, to be useful as a structural glazing adhesive when applied either directly to the tape core or transferred to the tape core as an adhesive film.

**TABLE X**

| Ex | R/P | Initial Properties | | | | | |
|---|---|---|---|---|---|---|---|
| | | Tack | Adh | Rel | ST | SA | kg/m |
| 26 | 50/50 | 732 | 46 | 40 | 823 | (46) | 51 |
| 27 | 52/47 | 422 | 43 | 25 | 729 | (49) | 55 |
| 28 | 55/45 | 562 | 45 | 30 | 643 | (49) | 55 |
| 29 | 57/42 | 643 | 43 | 25 | 735 | (48) | 54 |
| 30 | 60/40 | 578 | 38 | 25 | 806 | (47) | 52 |

**TABLE XI**

| Ex | 0 Days | | 3 Days | | 7 Days | | 14 Days | | Comments |
|---|---|---|---|---|---|---|---|---|---|
| | TA, (psi) | kPa | TA, (psi) | kPa | TA, (psi) | kPa | TA, (psi) | kPa | |
| 26 | (67.6) | 466.1 | (107.4) | 740.5 | (106.7) | 735.6 | (121.8) | 839.8 | Core coating |
| 27 | (49.7) | 342.7 | (137.6) | 948.7 | (114.8) | 791.5 | (137.7) | 949.4 | Core coating |
| 28 | (60.8) | 419.2 | (149.4) | 1030.1 | (142.3) | 981.1 | (143.4) | 988.7 | Core coating |
| 29 | (76.6) | 528.1 | (142.8) | 984.5 | (115.5) | 796.3 | (121.3) | 836.3 | Core coating |
| 30 | (94.8) | 653.6 | (121.3) | 836.3 | (115.0) | 792.9 | (118.8) | 819.1 | Core coating |
| 28 | (82.0) | 565.3 | (118.3) | 815.7 | (102.4) | 706.0 | (122.6) | 845.3 | Transfer film |
| 30 | (62.0) | 427.5 | (101.4) | 699.1 | (128.4) | 885.3 | (100.5) | 692.9 | Transfer film |

### Examples 31-33

The composition of Example 28 was prepared from two lots of resin, either ETMDZ(C) or ETMDZ(F) and under three reaction conditions. All compositions were prepared according to the process used in Example 28 except the ETMDZ(C) and HMDZ were added at 100°C in Example 31 and the order of addition for ETMDZ(C) and HMDZ were reversed in Example 33. The ETMDZ(C) and Solution A for Example 31 were the same as that used in Example 28. ETMDZ(F) was used for Example 32. The ETMDZ(C) for Example 33 was 72% pure. Examples 32 and 33 used the same resin. Tables XII and XIII list the adhesive properties of these compositions. The core coating and adhesive transfer specimens of Example 31 was also subjected to 90 day tensile adhesion testing. Those results are summarized in Table XIV.

**TABLE XII**

| Amount of Reactants, parts | | | | | | Initial Properties | | | | | |
|---|---|---|---|---|---|---|---|---|---|---|---|
| Ex | Resin | Gum | ETMDZ | TFAA | HMDZ | Tack | Adh | Rel | ST | SA | kg/m |
| 31 | 130.71 | 75.0 | 13.45 | 0.6 | 11.39 | - | - | - | - | - | |
| 32 | 130.06 | 81.2 | 9.10 | 0.6 | 11.39 | 725 | 44 | 50 | 443 | (19) | 21 |
| 33 | 130.06 | 81.2 | 12.64 | 0.6 | 2.28 | 922 | 45 | 39 | 473 | (32) | 36 |

**TABLE XIII**

| Ex | 0 Days | | 3 Days | | 7 Days | | 14 Days | | Comments |
|---|---|---|---|---|---|---|---|---|---|
| | TA, (psi) | kPa | TA, (psi) | kPa | TA, (psi) | kPa | TA, (psi) | kPa | |
| 31 | (87.0) | 599.8 | (131.0) | 903.2 | (127.7) | 880.5 | (156.3) | 1077.7 | Core coating |
| 31 | (90.7) | 625.4 | (119.0) | 820.5 | (119.3) | 822.5 | (135.7) | 935.6 | Transfer film |
| 32 | (120.0) | 827.4 | (147.0) | 1013.5 | - | | (183.8) | 1267.3 | * |
| 33 | (128.0) | 882.5 | (171.6) | 1183.1 | - | | (199.5) | 1375.5 | * |

| | | | | | | | | | |
|---|---|---|---|---|---|---|---|---|---|
| * Transfer film made from 20 mil thick wet adhesive. Core #2 was used. | | | | | | | | | |

**TABLE XIV**

| Aging | Ex. ii | | Ex. 25 | | Ex. 29 | | Ex. 31 | | Ex. 31* | |
|---|---|---|---|---|---|---|---|---|---|---|
| | TA, (psi) | kPa | TA, (psi) | kPa | TA, (psi) | kPa | TA, (psi) | kPa | TA, (psi) | kPa |
| 0 Days | (59.0) | 406.8 | (60.8) | 419.2 | (74.0) | 510.2 | (65.3) | 450.2 | (96.9) | 668.1 |
| 3 Days | - | | (109.9) | 757.7 | (109.0) | 751.5 | (102.2) | 704.6 | (95.0) | 655.0 |
| 7 Days | (80.4) | 554.3 | (99.7) | 687.4 | (115.7) | 797.7 | (106.6) | 735.0 | (115.0) | 792.9 |
| 14 Days | (104.2) | 718.4 | (127.0) | 875.6 | (124.9) | 861.2 | (115.2) | 794.3 | (134.6) | 928.0 |
| 21 Days | (98.8) | 681.2 | (136.3) | 939.8 | (138.9) | 957.7 | (117.0) | 806.7 | (130.6) | 900.5 |
| 30 Days | (99.5) | 686.0 | (137.0) | 944.6 | (154.0) | 1061.8 | (127.9) | 881.8 | (131.2) | 904.6 |
| 60 Days | (118.3) | 815.6 | (143.7) | 990.8 | (173.4) | 1195.6 | (149.5) | 1030.8 | (175.8) | 1212.1 |
| 90 Days | (105.5) | 727.4 | (154.0) | 1061.8 | (150.3) | 1036.3 | (135.4) | 933.6 | (161.1) | 1110.7 |

| | | | | | | | | | | |
|---|---|---|---|---|---|---|---|---|---|---|
| * Test specimen was from a transfer film made from a 508 µm (20 mil) wet coat. | | | | | | | | | | |

### Examples 34-46

A solution of 29 parts of xylene, 40 parts Solution A and 23 parts of Polymer A was heated for 5 hours at 140°C and then cooled to 70°C, whereupon 4.4 parts of ETMDZ(C) and 0.2 parts of TFAA were added and the mixture was heated at 100°C for 1 hour. The reaction mixture was again cooled to 70°C and 3.5 parts of HMDZ was added and the mixture again heated at 100°C for 1 hour.

Thirteen 100-part portions of the resulting base composition containing approximately 40% solvent were each mixed with 3.64 parts of n-propylorthosilicate and catalyzed with TBT, KR238, SSA2 or TDIDE to provide 13 compositions of this invention, as noted in Table XV. The catalyzed compositions were cast onto a release liner at a wet thickness of 508 µm (20 mils) and devolatilized.

Half of the liner-bearing adhesive film was cut to a width of 2.54 cm (1/2") and used to transfer adhesive to both bonding sides of four pieces of the silicone core to provide double-sided tapes. The double-sided tapes, with liner in place, were stored in the absence of moisture for 2 months at room temperature. The aged tapes were freed of their liners and then tested for tensile adhesion, as described above, using glass panels. The release from the liner and the subsequent tack of the adhesive were noted as the test specimens were being prepared. The results have been summarized in Table XV. Adhesive failure from the glass was obtained in each case.

All fresh and 2-month old double-sided tapes using adhesives of this invention demonstrated excellent 0-day tensile adhesion, which increased substantially over a 14-day exposure to ambient moisture.

Half of the liner-bearing adhesive film was covered with another release liner and was stored in the absence of moisture for 6 or 8 months at room temperature. The aged adhesive transfer films were cut to a width of 2.54 cm (1/2") and were then used to prepare double-sided tapes, as noted above, and the tapes were immediately tested for tensile adhesion, as described above, using glass panels. The release from the liner and wet-out on glass of the adhesive were noted when the test specimens were being prepared. The results have been summarized in Table XVI.

All transfer adhesive films of this invention demonstrated good to excellent wet-out on glass and excellent initial 0-day tensile adhesion which increased over a 28-day exposure to ambient moisture.

### Examples 47-50

Examples 38, 39, 40 and 46 were duplicated except 3.78 parts of bis(trimethoxysilyl)ethane was used in place of the 3.64 parts of n-propylorthosilicate to provide the compositions of Examples 47, 48, 49 and 50, repectively. The four compositions of this invention were used to make adhesive transfer films which were stored in the absence of moisture for 6 months at room temperature. The aged adhesive transfer films were then used to prepare double-sided tapes, as noted above, and the tapes were immediately tested for tensile adhesion, as described above, using glass panels. The release and wet-out of the adhesive were noted before the test specimens were prepared. The results have been summarized in Table XVI. All transfer adhesive films of this invention demonstrated excellent initial O-day tensile adhesion which increased over a 28-day exposure to ambient moisture.

**TABLE XV**

| Ex | Catalyst | | Adh** | | TA, psi after 0 and 2 Months Aging | | | | | |
|---|---|---|---|---|---|---|---|---|---|---|
| | Type* | Amnt. | | | 0 Day Cure | | 3 Day Cure | | 14 Day Cure | |
| | | | R | ST | 0 mo. | 2 mo. | 0 mo. | 2 mo. | 0 mo. | 2 mo. |
| 34 | KR238 | 1.000 | m | m | 110 | 88 | 170 | 85 | 195 | 118 |
| 35 | KR238 | 0.500 | m | m | 86 | 100 | 151 | 98 | 190 | 133 |
| 36 | KR238 | 0.250 | g | g | 97 | 96 | 136 | 100 | 164 | 120 |
| | | | | | | | | | | |
| 37 | TBT | 1.000 | g | m | 99 | - | 124 | - | 144 | - |
| 38 | TBT | 0.500 | m | m | 118 | 70 | 112 | 90 | 164 | 130 |
| 39 | TBT | 0.250 | m | m | 97 | 60 | 160 | 118 | 180 | 108 |
| 40 | TBT | 0.125 | g | g | 98 | 74 | 123 | 109 | 137 | 118 |
| | | | | | | | | | | |
| 41 | SSA2 | 1.000 | - | - | 95 | - | 155 | - | 196 | - |
| 42 | SSA2 | 0.500 | m | m | - | 75 | 160 | 110 | >225 | 155 |
| 43 | SSA2 | 0.250 | g | g | 80 | 65 | 127 | 105 | 156 | 132 |
| 44 | SSA2 | 0.190 | - | - | 70 | - | - | - | 115 | - |
| 45 | SSA2 | 0.096 | - | - | 74 | - | - | - | 85 | - |
| | | | | | | | | | | |
| 46 | TDIDE | 0.200 | g | g | 111 | 84 | 166 | 113 | 190 | 120 |

| | | | | | | | | | | |
|---|---|---|---|---|---|---|---|---|---|---|
| * See Materials section above for type meanings. | | | | | | | | | | |
| ** R = Release; ST = Subsequent tack. g = good; m = moderate. | | | | | | | | | | |

**TABLE XVI**

| Ex | Catalyst | | Adh** | | TA after 6 or 8 Months Adhesive Aging | | | | | |
|---|---|---|---|---|---|---|---|---|---|---|
| | Type* | Amnt. | R | WO | 0 Day Cure | | 3 Day Cure | | 28 Day Cure | |
| | | | | | Months /(psi) | kPa | Months /(psi) | kPa | Months /(psi) | kPa |
| 35 | KR238 | 0.500 | g | e | 8/(87) | 600 | 8/(107) | 738 | 8/(136) | 938 |
| | | | | | | | | | | |
| 38 | TBT | 0.500 | g | g | 6/(90) | 621 | 6/(115) | 793 | 6/(112) | 772 |
| 39 | TBT | 0.250 | s | g | 6/(93) | 641 | 6/(100) | 689 | 6/(100) | 689 |
| 40 | TBT | 0.125 | s | g | 6/(80) | 552 | 6/(110) | 758 | 6/(120) | 827 |
| | | | | | | | | | | |
| 41 | SSA2 | 1.000 | e | g | 8/(107) | 738 | 8/(155) | 1069 | 8/(164) | 1131 |
| 42 | SSA2 | 0.500 | e | e | 8/(118) | 814 | 8/(151) | 1041 | 8/(160) | 1103 |
| 43 | SSA2 | 0.250 | g | e | 8/(102) | 703 | 8/(125) | 822 | 8/(140) | 965 |
| | | | | | | | | | | |
| 46 | TDIDE | 0.200 | g | g | 6/(75) | 517 | 6/(92) | 634 | 6/(115) | 793 |
| | | | | | | | | | | |
| 47 | TBT | 0.500 | g | g | 6/(90) | 621 | 6/(115) | 793 | 6/(123) | 848 |
| 48 | TBT | 0.250 | s | g | 6/(80) | 552 | - | - | 6/(100) | 689 |
| 49 | TBT | 0.125 | s | g | 6/(89) | 614 | 6/(110) | 758 | 6/(118) | 814 |
| 50 | TDIDE | 0.200 | g | g | 6/(74) | 510 | 6/(96) | 662 | 6/(115) | 793 |

| | | | | | | | | | | |
|---|---|---|---|---|---|---|---|---|---|---|
| * See Materials section above for type meanings. | | | | | | | | | | |
| ** R = Release; WO = Wet-out. e = excellent; g = good; s = spotty. | | | | | | | | | | |

### Examples 51-53

The composition of Example 37 was duplicated except the 3.64 parts of n-propylorthosilicate were replaced with an amount of either MTM (Ex. 51), EOS (Ex. 52) or EPS (Ex. 53), as indicated in Table XVII. The three compositions of this invention were used to make double-sided tapes which were immediately tested for tensile adhesion. All adhesives released well from their liners. After a 28 day cure all adheives were tackless after being separated from the glass of the test specimens.

### Examples 54-56

The composition of Example 46 was duplicated except 3.64 parts of n-propylorthosilicate were replaced with an amount of either MTM (Ex. 54), EOS (Ex. 55) or EPS (Ex. 56), as indicated in Table XVII. The three compositions of this invention were used to make double-sided tapes which were immediately tested for tensile adhesion. All adhesives released well from their liners. After a 28 day cure adhesive 51 was dry, adhesive 52 was slightly tacky and adhesive 53 was tacky after being separated from the glass of the test specimens.

**TABLE XVII**

| Ex | Alkoxy Cpd. | | 0 Days | | 3 Days | | 14 Days | | 28 Days | |
|---|---|---|---|---|---|---|---|---|---|---|
| | Name* | Parts | TA, (psi) | kPa | TA, (psi) | kPa | TA, (psi) | kPa | TA, (psi) | kPa |
| 51 | MTM | 1.88 | (95) | 655 | (106) | 731 | (134) | 924 | (134) | 924 |
| 52 | EOS | 2.92 | (103) | 710 | (115) | 793 | (126) | 869 | (121) | 834 |
| 53 | EPS | 3.20 | (102) | 703 | (108) | 745 | (121) | 834 | (123) | 848 |
| | | | | | | | | | | |
| 54 | MTM | 1.88 | (91) | 627 | (100) | 689 | (101) | 696 | (118) | 814 |
| 55 | EOS | 2.92 | (89) | 614 | (92) | 634 | (93) | 641 | (100) | 689 |
| 56 | EPS | 3.20 | (85) | 586 | (89) | 614 | (89) | 614 | (88) | 607 |

| | | | | | | | | | | |
|---|---|---|---|---|---|---|---|---|---|---|
| * MTM = methyltrimethoxy silane; EOS = ethyl orthosilicate; EPS = ethyl polysilicate. | | | | | | | | | | |

## Claims

1. A composition comprising:
(A) a silicone pressure sensitive adhesive component bearing curing radicals having the formula Me_{b}(MeO)_{3-b} Si(C₂H₄SiMe₂)ₓ(OSiMe₂)yD-wherein Me denotes methyl, D denotes oxygen or C₂H₄, b = 0 or 1, x = 0 to 2 and y has an average value of from 0 to 6, wherein the silicone pressure sensitive adhesive component comprises a bodied mixture of (1) a silanol-containing organopolysiloxane resinous portion comprising Me₃SiO_{1/2} siloxane units and SiO_{4/2} siloxane units, wherein the mol ratio of the Me₃SiO_{1/2} siloxane units to SiO_{4/2} siloxane units has a value of from 0.5/1 to 1.5/1 and (2) a polydimethylsiloxane gum having a viscosity at 25°C of from 100,000 to 100,000,000 mPa.s (centipoise), wherein the weight ratio of the resinous portion (1) to the polydimethylsiloxane gum (2) is in the range of from 5/95 to 70/30, all other silicon-bonded radicals of the silicone pressure sensitive adhesive component being selected from the group consisting of divalent oxygen atoms linking silicon atoms, hydroxyl radicals, hydrogen atoms and monovalent hydrocarbon radicals,
and wherein, said composition further comprises:
(B) an effective amount of a catalyst component to accelerate the reaction of the curing radicals with moisture to form siloxane bonds; and
(C) an effective amount of a silicon compound bearing a plurality of silicon-bonded alkoxy radicals to improve the shelf life of the composition.

2. A composition according to claim 1 wherein the silicone pressure sensitive adhesive component is a silanol-free silicone pressure sensitive adhesive component.

3. A composition according to claim 1, wherein said bodied mixture comprises from 40 to 60 parts of the resinous portion (1) to 40 to 60 parts of the gum (2) and the mol ratio of Me₃SiO_{1/2} to SiO_{4/2} siloxane units is from 0.6/l to 0.9/l and wherein the viscosity of the gum (2) is at least 1,000,000 mPa.s (centipoise).

4. A method of preparing the composition of claim 1, comprising reacting (i) the silicone pressure sensitive adhesive component of claim 1 having reactive sites of the formula SiX, with (ii) a moisture reactive compound having the formula Me_{b}(MeO)_{3-b}SiY wherein Y denotes a radical which is reactive with SiX, whereby the Y-substituted silicon atom is linked with the X-substituted silicon atom by a divalent -(C₂H₄SiMe₂)ₓ(OSiMe₂)yD- as defined in claim 1 and (iii) reacting SiOH groups with a silanol-capping compound having the formula Me₃SiY' wherein Y' denotes a radical which is reactive with silanol, whereby the Y'- substituted silicon atom is linked with the silanol- substituted silicon atom by a divalent oxygen atom, and wherein the silicone pressure sensitive adhesive component is prepared by bodying a mixture of (1) an organopolysiloxane resinous portion comprising Me₃SiO_{1/2} siloxane units and SiO₄/₂ siloxane units, wherein the mol ratio of the Me₃SiO_{1/2} siloxane units to SiO_{4/2} siloxane units has a value of from 0.5/1 to 1.5/1 and (2) a polydimethylsiloxane gum having a viscosity at 25°C of from 100,000 to 100,000,000 mPa.s (centipoise) wherein the weight ratio of the resinous portion (1) to the polydimethylsiloxane gum (2) is in the range of from 5/95 to 70/30, and said method further comprises mixing an effective amount of a catalyst component to accelerate the reaction of the curing radicals with moisture to form siloxane bonds and an effective amount of a silicon compound bearing a plurality of silicon-bonded alkoxy radicals to improve the shelf life of the composition.

5. A method according to claim 4, wherein substantially all X radicals are hydroxyl, the moisture-reactive compound is a disilazane and said reaction is promoted by the action of an acid catalyst.

## Patentansprüche

1. Zusammensetzung enthaltend:
(A) eine Siliconhaftkleberkomponente, die vernetzende Reste der Formel Me_{b}(MeO)_{3-b}Si(C₂H₄SiMe₂)ₓ(OSiMe₂)_{y}D trägt, worin Me für Methyl steht, D für Sauerstoff oder C₂H₄ steht, b = 0 oder 1 ist, x = 0 bis 2 ist und y einen Mittelwert von 0 bis 6 aufweist, wobei die Siliconhaftkleberkomponente eine eingedickte Mischung enthält, die aufgebaut ist aus
(1) einem harzartigen, silanolhaltigen Organopolysiloxananteil, der Me₃SiO_{1/2}-Siloxaneinheiten und SiO_{4/2}-Siloxaneinheiten enthält, wobei das Molverhältnis von Me₃SiO_{1/2}-Siloxaneinheiten zu SiO_{4/2}-Siloxaneinheiten einen Wert von 0,5/1 bis 1,5/1 aufweist, und
(2) einem Polydimethylsiloxanharz mit einer Viskosität von 100.000 bis 100.000.000 mPa·s (Centipoise) bei 25°C, wobei das Gewichtsverhältnis des harzartigen Anteils (1) zu dem Polydimethylsiloxanharz (2) im Bereich von 5/95 bis 70/30 beträgt und alle anderen an Silicium gebundenen Reste der Siliconhaftkleberkomponente ausgewählt sind aus der Gruppe bestehend aus zweiwertigen Sauerstoffatomen, die Siliciumatome miteinander verbinden, Hydroxylresten, Wasserstoffatomen und einwertigen Kohlenwasserstoffresten,
und wobei diese Zusammensetzung weiterhin enthält:
(B) eine wirksame Menge einer Katalysatorkomponente, um die Reaktion der vernetzenden Reste mit Feuchtigkeit zu beschleunigen, um Siloxanbindungen auszubilden, und
(C) eine wirksame Menge einer Siliciumverbindung, die eine Vielzahl von an Silicium gebundenen Alkoxyresten trägt, um die Lagerbeständigkeit der Zusammensetzung zu verbessern.

2. Zusammensetzung nach Anspruch 1,
**dadurch gekennzeichnet**,
daß die Siliconhaftkleberkomponente eine Siliconhaftkleberkomponente frei von Silanolgruppen ist.

3. Zusammensetzung nach Anspruch 1,
**dadurch gekennzeichnet**,
daß diese eingedickte Mischung von 40 bis 60 Teile des harzartigen Anteils (1) bis 40 bis 60 Teile des Harzes (2) enthält und das Molverhältnis von Me₃SiO_{1/2}- zu SiO_{4/2}-Si-loxaneinheiten von 0,6/1 bis 0,9/1 beträgt, wobei die Viskosität des Harzes (2) wenigstens 1.000.000 mPa·s (Centipoise) beträgt.

4. Verfahren zur Herstellung der Zusammensetzung des Anspruchs 1, umfassend Umsetzen (i) der Siliconhaftkleberkomponente des Anspruchs 1 mit reaktiven Stellen der Formel SiX mit (ii) einer gegenüber Feuchtigkeit reaktiven Verbindung der Formel Me_{b}(MeO)_{3-b}SiY, worin Y für einen Rest steht, der mit SiX umgesetzt werden kann, wobei das Y-substituierte Siliciumatom mit dem X-substituierten Siliciumatom über die, wie in Anspruch 1 definierte, zweiwertige Gruppe -(C₂H₄SiMe₂)ₓ(OSiMe₂)_{y}D- verbunden wird, und (iii) Umsetzen der SiOH-Gruppen mit einer Silanolschutzgruppe mit der Formel Me₃SiY', worin Y' für einen Rest steht, der mit Silanol reagieren kann, wobei das Y'-substituierte Siliciumatom mit dem silanolsubstituierten Siliciumatom über ein zweiwertiges Sauerstoffatom verbunden wird und wobei die Siliconhaftkleberkomponente durch Verdicken einer Mischung von
(1) einem harzartigen Organopolysiloxananteil, der Me₃SiO_{1/2}-Siloxaneinheiten und SiO_{4/2} -Siloxaneinheiten enthält, wobei das Molverhältnis der Me₃SiO_{1/2}-Siloxaneinheiten zu SiO_{4/2}-Siloxaneinheiten einen Wert von 0.5/1 bis 1,5/1 annimmt, und
(2) einem Polydimethylsiloxanharz mit einer Viskosität von 100.000 bis 100.000.000 mPa·s (Centipoise) bei 25°C, wobei das Gewichtsverhältnis des harzartigen Anteils (1) zu dem Polydimethylsiloxanharz (2) im Bereich von 5/95 bis 70/30 liegt,
hergestellt wird und dieses Verfahren weiterhin das Zumischen einer wirksamen Menge einer Katalysatorkomponente umfaßt, um die Reaktion der vernetzenden Reste mit Feuchtigkeit, um Siloxanbindungen auszubilden, zu beschleunigen, und einer wirksamen Menge einer Siliciumverbindung, die eine Vielzahl von an Silicium gebundenen Alkoxyresten trägt, um die Lagerbeständigkeit der Zusammensetzung zu verbessern.

5. Verfahren nach Anspruch 4,
**dadurch gekennzeichnet**,
daß im wesentlichen alle X-Gruppen Hydroxyl sind, die mit Feuchtigkeit reaktive Verbindung Disilazan ist und diese Reaktion durch die Wirkung eines sauren Katalysators begünstigt wird.

## Revendications

1. Une composition comprenant :
(A) un composant adhésif de silicone sensible à la pression portant des radicaux durcisseurs ayant la formule Me_{b}(MeO)_{3-b}Si(C₂H₄SiMe₂)ₓ(OSiMe₂)_{y}D- où Me représente le radical méthyle, D représente l'oxygène ou C₂H₄, b = 0 ou 1, x = 0 à 2 et la valeur moyenne de y est de 0 à 6, le composant adhésif de silicone sensible à la pression comprenant un mélange épaissi de (1) une portion résineuse d'organopolysiloxane à fonction silanol comprenant des motifs siloxane Me₃SiO_{1/2} et des motifs siloxane SiO_{4/2}, où le rapport molaire des motifs siloxane Me₃SiO_{1/2} aux motifs siloxane SiO_{4/2} a une valeur de 0,5/1 à 1,5/1 et (2) une gomme de polydiméthylsiloxane ayant une viscosité à 25°C de 100 000 à 100 000 000 mPa.s, le rapport en poids de la portion résineuse 1) à la gomme de polydiméthylsiloxane (2) étant compris dans l'intervalle de 5/95 à 70/30, tous les autres radicaux liés au silicium du composant adhésif de silicone sensible à la pression étant choisis dans le groupe formé par des atomes d'oxygène divalent reliant les atomes de silicium, des radicaux hydroxyle, des atomes d'hydrogène et des radicaux hydrocarbonés monovalents,
et ladite composition comprenant de plus :
(B) une quantité efficace d'un composant catalyseur pour accélérer la réaction des radicaux durcisseurs avec l'humidité pour former des liaisons siloxane ; et
(C) une quantité efficace d'un composé silicié portant plusieurs radicaux alcoxy liés au silicium pour améliorer la durée de conservation au stockage de la composition.

2. Une composition selon la revendication 1, dans laquelle le composant adhésif de silicone sensible à la pression est un composant adhésif de silicone sensible à la pression exempt de groupes silanol.

3. Une composition selon la revendication 1, dans laquelle ledit mélange épaissi comprend 40 à 60 parties de la portion résineuse (1) pour 40 à 60 parties de la gomme (2), et le rapport molaire des motifs siloxane Me₃SiO_{1/2} à SiO_{4/2} est de 0,6/1 à 0,9/1, et dans laquelle la viscosité de la gomme (2) est d'au moins 1 000 000 mPa.s.

4. Un procédé de préparation de la composition de la revendication 1, consistant à faire réagir (i) le composant adhésif de silicone sensible à la pression de la revendication 1 ayant des sites réactifs de la formule SiX, avec (ii) un composé réactif avec l'humidité ayant la formule Me_{b}(MeO)_{3-b}SiY où Y représente un radical qui est réactif avec SiX, si bien que l'atome de silicium substitué par Y soit relié à l'atome de silicium substitué par X au moyen d'un radical divalent -(C₂H₄SiMe₂)ₓ(OSiMe₂)_{y}D- tel que défini dans la revendication 1 et (iii) faire réagir les groupes SiOH avec un composé de coiffage de silanol ayant la formule Me₃SiY' où Y' représente un radical qui est réactif avec un groupe silanol, si bien que l'atome de silicium substitué par Y' soit relié par un atome d'oxygène divalent à l'atome de silicium substitué par un groupe silanol, et dans lequel le composant adhésif de silicone sensible à la pression est préparé en épaississant un mélange de (1) une portion résineuse d'organopolysiloxane comprenant des motifs siloxane Me₃SiB_{1/2} et des motifs siloxane SiO_{4/2}, où le rapport molaire des motifs siloxane Me₃SiO_{1/2} à SiO_{4/2} a une valeur de 0,5/1 à 1,5/1 et (2) une gomme de polydiméthylsiloxane ayant une viscosité à 25°C de 100 000 à 100 000 000 mPa.s, le rapport en poids de la portion résineuse (1) à la gomme de polydiméthylsiloxane (2) étant compris dans l'intervalle de 5/95 à 70/30, et ledit procédé consiste de plus à mélanger une quantité efficace d'un composant catalyseur pour accélérer la réaction des radicaux durcisseurs avec l'humidité pour former des liaisons siloxane et une quantité efficace d'un composé silicié portant plusieurs radicaux alcoxy liés au silicium pour améliorer la durée de conservation au stockage de la composition.

5. Un procédé selon la revendication 4, dans lequel sensiblement tous les radicaux X sont des radicaux hydroxyle, le composé réactif avec l'humidité est un disilazane et ladite réaction est activée par l'action d'un catalyseur acide.
